# EUROPÄISCHE PATENTSCHRIFT

(11) **EP 1 560 010 B1**
(45) Veröffentlichungstag und Bekanntmachung des Hinweises auf die Patenterteilung: **02.09.2009**
(21) Anmeldenummer: 04075198.4
(22) Anmeldetag: 27.01.2004
(51) Int. Cl.: G01L 1/22, G01G 3/14

(54) **Kraftmesszelle mit Dehnmessstreifen mit Klebeschicht aus anorganisch-organischem Hybrid-Polymer (ORMOCER)**
Load cell with strain gauge with adhesive layer of inorganic-organic hybrid-polymer (ORMOCER)
Cellule de mesure de force avec jauge de contrainte avec couche d'adhésif de polymer hybride inorganique-organique (ORMOCER)

(43) Veröffentlichungstag der Anmeldung: 03.08.2005
(73) Patentinhaber: Mettler-Toledo AG, 8606 Greifensee (CH)
(72) Erfinder: Tellenbach, Jean-Maurice, 8442 Hettlingen (CH); Ziebart, Volker, 8418 Schlatt (CH)

(56) Entgegenhaltungen:
- EP-A- 1 308 705
- DE-A- 4 320 666
- GB-A- 2 051 819
- US-A- 3 935 636
- US-A- 5 631 622
- US-B1- 6 283 578
- US-B1- 6 631 646
- K.-H. HAAS ET AL.: "Functionalized coatings based on inorganic-organic polymers (ORMOCER) and their combination with vapor deposited inorganic thin films" SURFACE AND COATINGS TECHNOLOGY, Bd. 111, 1999, Seiten 72-79, XP002270798

## Beschreibung

Die Erfindung betrifft eine Kraftmesszelle mit einem Verformungskörper und mit mindestens einem auf dem Verformungskörper vermittels einer Klebeschicht aufgebrachten Dehnmessstreifen, der eine dehnungsempfindliche, auf einen Träger aufgebrachte elektrische Widerstandsbahn aufweist. Die Erfindung betrifft ferner ein Verfahren zur Befestigung eines Dehnmessstreifens auf einem Verformungskörper.

Ein Dehnmessstreifen weist eine auf einem Träger aufgebrachte metallische Widerstandsbahn auf, welche vorzugsweise in Form einer Mäanderstruktur mittels bekanntem Ätzverfahren hergestellt wird. Ferner sind auf dem Träger meist auch die Anschlusselektroden zur Kontaktierung der Widerstandsbahn vorhanden, wobei diese häufig in einem Arbeitsgang mit der Widerstandsbahn entstehen und somit auch vorwiegend aus demselben Material bestehen. Als Trägermaterial für Dehnmessstreifen werden elektrische Isolatoren verwendet; je nach Anwendungsbereich findet man Glas, Keramik, häufig auch Polymere, glasfaserverstärkte Polymere oder Kompositmaterialien. Dehnmessstreifen sind Messelemente, bei welchen eine mechanische Verformung eine Änderung des elektrischen Widerstandes hervorruft, und welche daher zur Messung der die Verformung bewirkenden Kraft benutzt werden.

In der Wägetechnologie, beispielsweise, werden Dehnmessstreifen zur Wandlung einer durch eine Kraft auf einen Verformungskörper bewirkten Verformung in ein elektrisches Signal verwendet. In einer solchen Kraftmesszelle entsteht eine Auslenkung des vertikal beweglichen Lastaufnehmers gegenüber dem räumlich feststehenden Teil des Verformungskörpers durch die Kraftwirkung einer Last auf der mit dem Lastaufnehmer verbundenen Waagschale. In einer bevorzugten Ausbildungsform weisen solche Verformungskörper vier durch dünne Materialbereiche geformte, elastische Biegestellen auf, welche jeweils an den vier Eckpunkten eines Parallelogramms angeordnet sind, wobei der Lastaufnehmer als vertikal beweglicher Parallelogrammschenkel gegenüber einem vorzugsweise am Waagengehäuse befestigten, ebenfalls vertikalen Parallelogrammschenkel angeordnet ist. Die Grösse der in den dünnen Biegestellen hervorgerufenen Verformung wird mit mindestens einem auf einer der Biegestellen, meist mittels einer elektrisch isolierenden Klebeschicht aufgebrachten Dehnmessstreifen als Änderung seines elektrischen Widerstands gemessen.

Aufgrund ihrer elastischen Eigenschaften werden in der Wägetechnologie bevorzugt polymere Trägermaterialien, insbesondere Polyimide, aber auch Epoxide, Phenolharze, Melamine und Ketone für Dehnmessstreifen verwendet. Polymere Träger haben den Vorteil, dass sie sich aufgrund ihrer geringeren Steifigkeit dem Verformungskörper besser anpassen. Insbesondere wird dadurch die mechanische Belastung der Klebeschicht reduziert. Hystereseeffekte oder eine Zerstörung der einen starren Träger mit einem Verformungskörper verbindenden Klebeschicht treten hier weitaus seltener auf. Zusätzlich ermöglichen polymere Trägermaterialien bei Dehnmessstreifen mit einer mäanderförmig ausgebildeten Widerstandsbahn bekanntermassen eine Lastdriftkompensation durch eine entsprechende Ausbildung der Umkehrstellen der Widerstandsbahn. Im Übrigen sind Dehnmessstreifen mit polymeren Trägern besser handhabbar und preisgünstiger herzustellen.

Als Material für die Klebeschicht werden im Stand der Technik Epoxide, beispielsweise M-Bond 610 oder M-Bond 43-B der Firma Vishay Micro-Measurements eingesetzt. Diese in flüssiger Form vorliegenden Kleber werden bei Raumtemperatur durch Streichen z.B. mittels eines Pinsels auf den Verformungskörper im Bereich der Biegestellen aufgetragen. Anschliessend wird der Dehnmessstreifen aufgebracht und vorzugsweise unter Druck bei Temperaturen zwischen 150°C und 180°C in einem Ofen ausgehärtet. Die Dauer der Einwirkung erhöhter Temperatur beträgt einige Stunden, in der Regel 6 bis 8 Stunden.

Nachteilig bei Verwendung dieses Klebematerials und dem Verfahren zum Befestigen des Dehnmessstreifens auf dem Verformungskörpers ist, dass einerseits der Verformungskörper während der Einwirkung der erhöhten Temperatur beim Aushärtevorgang seine elastischen Eigenschaften zugunsten einer erhöhten Anelastizität verändert und andererseits in einem aufgeklebten Dehnmessstreifen so genannte thermischen Eigenspannungen insbesondere beim Abkühlen entstehen, welche abhängig von der Aushärtetemperatur und auch der anschliessenden Lagertemperatur zu einer Relaxation führen, die noch über einen längeren Zeitraum, das heisst bis zu einigen Monaten beobachtbar ist.

Anorganisch-organische Hybridpolymere, die zum Beispiel unter dem Handelsnamen ORMOCER® bekannt sind, sind eine neue Klasse von Verbundwerkstoffen, die aus anorganischen und organischen Netzen bestehen, welche sich auf molekularer Ebene miteinander verbinden und durchdringen. Ihre Herstellung erfolgt nach einem Sol-Gel-Prozess in Anwesenheit saurer oder basischer Katalysatoren. Sie zeichnen sich aus durch eine hohe Haltbarkeit, eine hohe Druck- und Kratzfestigkeit, sowie durch einen ausgezeichneten Elastizitätsmodul. Ausserdem sind sie kostengünstig herzustellen. In der DE 100 16 324 A1 wird beispielsweise der Einsatz der anorganisch-organischen Hybridpolymere für die Dentaltechnik beschrieben.

Ein Verfahren zur Herstellung solcher Materialien wird in der DE 43 03 570 A1 beschrieben. In einem ersten Schritt erfolgt eine hydrolytische Polykondensation von vernetzbaren organofunktionellen Silanen und mindestens einer Metallverbindung. Diese Kondensation kann gegebenenfalls unter Anwesenheit nicht vernetzbarer organofunktioneller Silane und im Reaktionsmedium löslicher schwerflüchtiger Oxide erfolgen. In einem zweiten Schritt wird ein organisch vernetzbares Präpolymer zugegeben, wonach in einem dritten Schritt das Material auf ein Substrat gegeben wird und in einem vierten Schritt mittels Strahlung oder Wärmebehandlung ausgehärtet wird.

Den anorganisch-organischen Hybridpolymeren wird eine hohe Abrieb- und Kratzfestigkeit sowie eine gute Haftung auf beliebigen Werkstoffen wie Metallen, Kunststoffen, Glas und Keramik bescheinigt. Das anorganische Netzwerk verleiht den anorganisch-organischen Hybridpolymeren Eigenschaften wie Härte und thermische Stabilität; das organische Netzwerk ist für die elastischen Eigenschaften verantwortlich. Physikalische Eigenschaften wie z.B. der Elastizitätsmodul oder der thermische Ausdehnungskoeffizient werden durch das Verhältnis von anorganischem zu organischem Vernetzungsgrad beeinflusst. Durch Beigabe von Füllstoffen können die physikalischen Eigenschaften ebenfalls modifiziert werden.

Die DE 101 38 423 A1 offenbart eine Kaschierklebemasse aus anorganisch-organischen Hybridpolymeren, wobei in das anorganisch-organische Polymernetzwerk modifizierte Füllstoffe kovalent oder ionisch eingebunden werden. Auf diese Weise wird die Barrierewirkung gegenüber Gasen und Dämpfen der Verbundsysteme, insbesondere Folien für die Verpackung von Lebensmitteln, verbessert.

In der EP 1 308 705 A1 wird die Herstellung eines Sensorelements mit einem Dehnmessstreifen beschrieben. Dabei wird vermittels eines Ink-Jet-Verfahrens eine Isolationsschicht auf einen vorwiegend metallischen Körper und auf diese eine elektrische Widerstandsbahn ebenfalls mittels eines Ink-Jet-Verfahrens aufgebracht. Die Isolationsschicht kann aus einem Polymer oder aus einem anorganisch-organischen hybridpolymer bestehen.

Aus der US 5 631 622 ist eine Schutzmassnahme gegen Feuchtigkeit für Dehnmessstreifen, die eine auf einem Trägermaterial aufgebrachte Widerstandsbahn aufweisen, bekannt. Anschliessend an die Herstellung der Dehnmessstreifen in einer Flächenanordnung, noch vor deren Vereinzelung, wird eine elektrisch isolierende Polymerfolie und darauf eine Metallfolie als zusätzliche Abdeckung aufgeklebt. Eine weitere Schicht kann als Deckschicht auf die Metallfolie aufgebracht werden.

Aufgabe der vorliegenden Erfindung ist es eine wirksame Verbindung zwischen einem Verformungskörper einer Kraftmesszelle und einem darauf aufzubringenden Dehnmessstreifen mit verbesserten Eigenschaften herzustellen.

In einer Kraftmesszelle mit einem Verformungskörper und mit mindestens einem auf dem Verformungskörper aufgebrachten Dehnmessstreifen, der eine dehnungsempfindliche, auf einem polymeren Träger aufgebrachte elektrische Widerstandsbahn aufweist, ist der Dehnmessstreifen vermittels einer Klebeschicht aus einem anorganisch-organischen Hybridpolymer mit dem Verformungskörper verbunden. Der Dehnmessstreifen ist mit einer Schutzschicht gegen eindringende Feuchtigkeit versehen, welcher eine ausebnende Schicht unterlegt ist. Die Schutzschicht ist als Mehrlagenschicht ausgeformt, die aus Barrierelagen und Zwischenlagen ausgebildet ist. Für die Barrierelagen kommen anorganische Materialien in Frage, für die Zwischenlagen können dies Polymere oder auch anorganische Materialien sein.

In einem Verfahren zum Befestigen eines Dehnmessstreifens auf dem Verformungskörper einer Kraftmesszelle wird ein anorganisch-organisches Hybridpolymer in gelöster Form auf den Verformungskörper aufgetragen, worauf der Dehnmessstreifen auf die Hybridpolymerschicht aufgebracht wird und anschliessend die Klebeschicht bei einer Temperatur zwischen 80°C und 130°C ausgehärtet wird. Dabei wird der Verformungskörper mit dem Dehnmessstreifen während einer Dauer zwischen einer halben Stunde und drei Stunden der erhöhten Temperatur ausgesetzt. Der mindestens eine Dehnmessstreifen wird mit einer Schutzbeschichtung gegen eindringende Feuchtigkeit versehen, welche eine ausebnende Schicht, die aus einem Polymer oder aus einem anorganisch-organischen Hybridpolymer besteht, aufweist, die direkt auf den Dehnmessstreifen appliziert wird und eine Schutzschicht aufweist, die als Mehrlagenschicht aus Barrierelagen und Zwischenlagen ausgebildet ist, wobei die Barrierelagen anorganische Materialien und die Zwischenlagen Polymere oder anorganische Materialien sind.

Ein entscheidender Vorteil ist darin zu sehen, das die anorganisch-organischen Hybridpolymere in kürzerer Zeit aushärten und die üblicherweise für diesen Vernetzungsvorgang benötigten Temperaturen bei niedrigeren Werten liegen, als für die gemäss dem Stand der Technik verwendeten Epoxid-Klebematerialien zum Befestigen eines Dehnmessstreifens auf dem Verformungskörper einer Kraftmesszelle.

Die Viskoelastizität eines Verformungskörpers, welche mit zunehmender Temperatur und zunehmender Dauer der Einwirkung der erhöhten Temperatur auf den Verformungskörper anwächst und sich als bleibende Veränderung manifestiert, ist daher im Vergleich zum Stand der Technik wesentlich weniger stark ausgeprägt, wodurch für anschliessende Messungen mit der Kraftmesszelle ein reduziertes Kriechverhalten und eine höhere Nullpunktsstabilität beobachtet wird.

Die vergleichsweise niederen Aushärtetemperaturen und Aushärtezeiten der Klebeschicht verursachen beim Abkühlen im Verbund mit dem Dehnmessstreifen weniger Spannungen, als die länger andauernde Einwirkung höherer Temperaturen bei den Befestigungsmethoden mit Klebematerialien gemäss dem Stand der Technik, wodurch die Relaxation dieser thermischen Eigenspannungen erheblich verkürzt wird und gleichzeitig eine kleinere Amplitude aufweist.

Da die physikalischen Eigenschaften anorganisch-organischer Hybridpolymere durch die Wahl der Ausgangskomponenten und durch die Zugabe von Füllstoffen, jedoch auch durch die Prozessparameter gezielt eingestellt werden können, lässt sich mit diesen Materialien auch eine hervorragende Anpassung des thermischen Ausdehnungskoeffizienten und des Elastizitätsmoduls an diejenigen des Trägermaterials für den Dehnmessstreifen herstellen. Somit weisen die mittels anorganisch-organischer Hybridpolymere aufgeklebten Dehnmessstreifen eine stabilere Dehnungsübertragung auf.

Der vorzugsweise aus Aluminium gefertigte Verformungskörper ist mit einer wenige Nanometer dicken Aluminiumoxidschicht versehen, welche bekanntermassen bei der Lagerung von Aluminium an Luft entsteht. Diese Oxidschicht ist besonders gut geeignet, eine fest haftende Verbindung zwischen dem Verformungskörper und der Klebeschicht aus dem anorganisch-organischen Hybridpolymer herzustellen, da diese mit Metalloxidoberflächen bevorzugt eine kovalente Bindung eingehen. Ferner ist die Aluminiumoxidschicht des Verformungskörpers porös, so dass vorwiegend über die anorganischen Komponenten der anorganisch-organischen Hybridpolymere eine mechanische Verankerung der Klebeschicht in der Aluminiumoxidschicht stattfindet, was ebenfalls zu einer erhöhten Haftung führt.

Gegebenenfalls kann, um diese Verankerung noch zu verstärken, die Dicke der Aluminiumoxidschicht durch geeignete Massnahmen erhöht werden, beispielsweise indem der Verformungskörper vor dem Aufkleben eines Dehnmessstreifens bei moderat erhöhter Temperatur einer Sauerstoffatmosphäre ausgesetzt wird oder chemisch beziehungsweise elektrochemisch vorbehandelt wird.

Neben den hervorragenden Klebeeigenschaften weisen die anorganisch-organischen Hybridpolymere auch eine gewisse Barrierewirkung gegenüber Wasserdampf oder Sauerstoff auf. Somit kann bei einigen Trägermaterialien, beispielsweise Polyimid, das Eindringen von Feuchtigkeit über die Klebeschicht, das heisst von unten in das polymere Trägermaterial verringert werden.

Für einen weiteren Feuchtigkeitsschutz wird ein bereits auf einem Verformungskörper aufgeklebter Dehnmessstreifen mit einer Schutzbeschichtung versehen. Diese weist eine ausebnende Schicht auf, welche direkt auf den Dehnmessstreifen appliziert wird und ebenfalls aus einem anorganisch-organischen Hybridpolymer bestehen kann, in bevorzugter Weise aus einem der Klebeschicht entsprechenden anorganischen-organischen Hybridpolymer. Ferner weist die Beschichtung eine Schutzschicht auf, welche als Mehrlagenschicht aus Barrierelagen und Zwischenlagen ausgebildet ist. Für die Barrierelagen kommen anorganische Materialien in Frage, für die Zwischenlagen können dies Polymere oder auch anorganische Materialien sein.

Das Aufbringen der anorganisch-organischen Hybridpolymermaterialien in gelöster Form auf den Verformungskörper erfolgt in bevorzugter Weise mittels des Tampondruckverfahrens. Auf diese Weise können Klebeschichten mit einer definierten, über die Fläche des Dehnmessstreifens gleich bleibenden Dicke aufgetragen werden. Eine gleichmässige Klebeschicht ist jedoch wesentlich für ein günstiges Hystereseverhalten und eine niedrige Drift in einer mit dem Verformungskörper versehenen Kraftmesszelle. Die gegenüber herkömmlichen Klebematerialien verbesserte Formstabilität einer mittels Tampondruck aufgetragenen, aus anorganisch-organischen Hybridpolymeren erzeugten Klebeschicht weist eine lediglich geringfügig grössere Fläche auf, als der Dehnmessstreifen.

In der folgenden Beschreibung ist die Erfindung anhand von Ausführungsbeispielen unter Bezugnahme auf die stark schematisierten Zeichnungen näher erläutert. Es zeigen:
- Figur 1: einen Verformungskörper einer Wägezelle mit auf den jeweiligen die Biegelager bildenden Bereichen geringer Materialstärke angebrachten Dehnmessstreifen in dreidimensionaler Darstellung,
- Figur 2: eine vergrösserte, dreidimensionale Darstellung des vom Kreis A in der Figur 1 umschlossenen Bereichs des Verformungskörpers mit einem aufgeklebten Dehnmessstreifen,
- Figur 3: einen einzelnen auf einen Verformungskörper aufgeklebten Dehnmessstreifen im Schnitt,
- Figur 4: einen einzelnen auf einen Verformungskörper aufgeklebten Dehnmessstreifen, der mit einer Schutzbeschichtung gegen eindringende Feuchtigkeit versehen ist, im Schnitt.

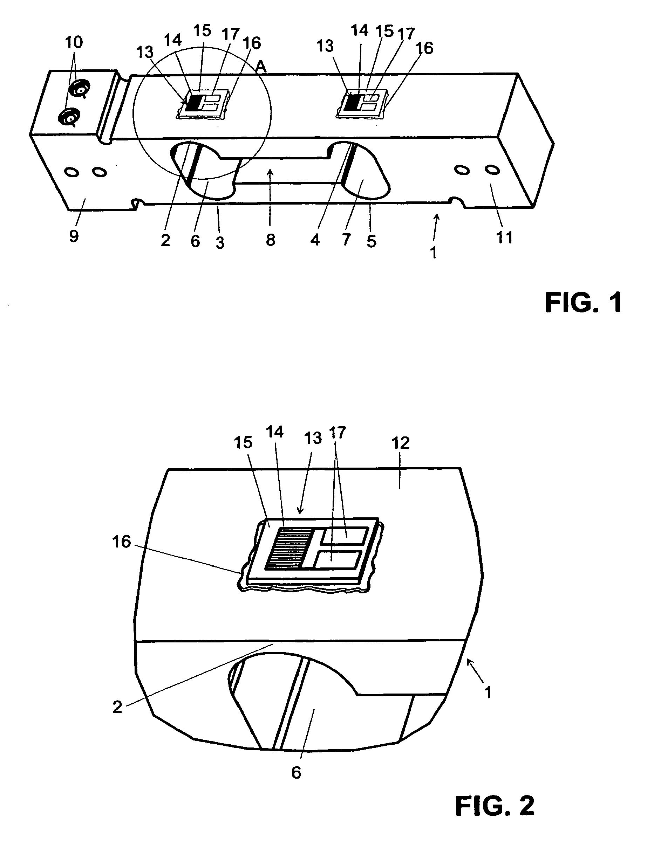

Die Figur 1 zeigt den Verformungskörper 1 einer Wägezelle mit vier an den Eckpunkten eines Parallelogramms angeordneten elastischen Biegestellen 2, 3, 4, 5. Diese werden durch bogenförmig erweiterte Randbereiche 6, 7 einer Ausnehmung 8 im Zentrum des einstückigen Verformungskörpers 1 gebildet. Der links in der Figur dargestellte Lastaufnehmer 9 des Verformungskörpers 1 ist in vertikaler Richtung beweglich. Liegt auf einer hier nicht sichtbaren Waagschale - die im Übrigen mittels mehrerer Schrauben in den Gewinden 10 am Lastaufnehmer 9 befestigbar ist - eine Last auf, so lenkt der Lastaufnehmer 9 unter Verformung der Biegestellen 2, 3, 4 und 5 vertikal nach unten gegenüber einem rechts in der Figur dargestellten feststehenden Teil 11 des Verformungskörpers 1, der an einem Gehäuse oder einem Zwischenhalter befestigt ist, aus. Zur Messung dieser Verformung sind an den Biegestellen 2, 4 auf der Oberseite 12 des Verformungskörpers 1 Dehnmessstreifen 13 aufgeklebt, welche eine dehnungsabhängige Widerstandsbahn 14, die vorzugsweise mäanderförmig auf einem Träger 15 angeordnet ist, aufweisen. Die Widerstandsbahn 15 ist mit Anschlusselektroden 17 für den Anschluss des detektierenden Brückenstromkreises (hier nicht gezeigt) verbunden. Der Träger 15 besteht aus einer Polyimidfolie und weist eine Dicke zwischen 10 und 30 Mikrometern auf. Bevorzugt werden nicht nur an den der Oberseite des Verformungskörpers 1 zugewandten Biegestellen 2, 4 Dehnmessstreifen 13 angeordnet, sondern auch an denjenigen an der Unterseite des Verformungskörpers 1, welche in der Zeichnung nicht sichtbar sind. Die Dehnmessstreifen 13 sind mit einer Klebeschicht 16 auf den Verformungskörper 1 aufgeklebt.

Die Klebeschicht 16 besteht aus einem anorganisch-organischen Hybridpolymer. Diese Stoffklasse, die zum Beispiel unter dem Handelsnamen ORMOCER® bekannt ist, weisen sowohl anorganische als auch organische Netzwerkstrukturen auf. Der Aufbau der anorganischen silikatischen Netzwerkstruktur erfolgt im Sol-Gel-Verfahren über die gesteuerte Hydrolyse und Kondensation von Alkoxisilanen, wobei sich durch zusätzliche in den Prozess einbezogene Metallalkoxide das silikatische Netzwerk gezielt modifizieren lässt. Durch Polymerisation von organofunktionellen Gruppen, welche durch die Organoalkoxylane in das Material eingebracht werden, wird zusätzlich ein organisches Netzwerk aufgebaut. Reaktive Methacrylat-, Epoxy- oder Vinylgruppen werden durch thermische oder photochemische Einwirkung polymerisiert. Als Beispiele für das Klebematerial können die in der DE 196 50 286 A1 beschriebenen anorganisch-organischen Hybridpolymere in Betracht gezogen werden.

Neben guten Haftungseigenschaften, weisen die anorganisch-organischen Hybridpolymere, insbesondere, wenn sie durch Füllstoffe, wie funktionalisierte SiO₂-Partikel oder Al₂O₃-Partikel modifiziert sind, eine gegenüber den Epoxid-Klebematerialien gemäss dem Stand der Technik um einen Faktor 5 bis10 erhöhte Barrierewirkung gegenüber eindringender Feuchtigkeit, beispielsweise Wasserdampf auf. Auf diese Weise wird das Eindringen von Feuchtigkeit über die Klebeschicht 16 in den Polyimid-Träger 15, welche zu einem unerwünschten Quellen dieses Materials führt, verringert.

In der Figur 2 ist der vom Kreis A der Figur 1 umschlossene Bereich des Verformungskörpers 1 vergrössert dargestellt. Es ist wie in der Figur 1 der auf der Biegestelle 2 an der Oberseite 12 des Verformungskörpers 1 applizierte Dehnmessstreifen 13, insbesondere auch die oben erwähnte Klebeschicht 16 zu sehen. Diese bedeckt den Verformungskörper 1 in einer etwas ausgedehnteren Fläche als der Dehnmessstreifen 13, wodurch eine die gesamte Trägerfläche erfassende Haftung gewährleistet wird. Die Klebemasse wird bevorzugt mittels Streichen, Walzen oder Sprühen oder Tampondruckverfahren auf den Verformungskörper 1 aufgebracht, wie weiter unten näher beschrieben wird.

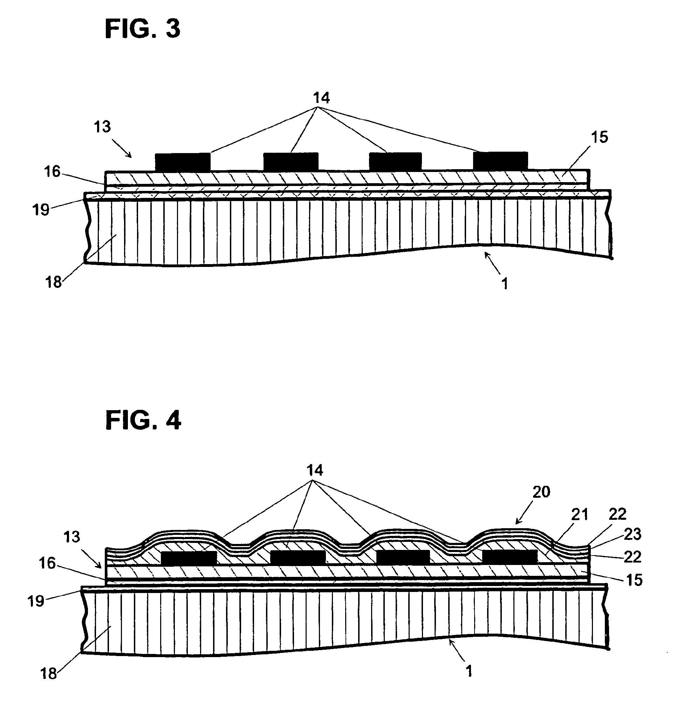

Figur 3 zeigt in einer Schnittzeichnung, wobei der Verformungskörper 1 gebrochen gezeichnet ist, die Anordnung eines auf den Verformungskörper 1 aufgeklebten Dehnmessstreifens 13, welcher eine auf dem Polyimid-Träger 15 aufgebrachte Widerstandsbahn 14 aufweist. Es sei an dieser Stelle erwähnt, dass die dargestellten Schichten und Bereiche nicht massstabsgetreu gezeichnet sind. Ferner ist der aus Aluminium bestehende Bereich 18 des Verformungskörpers 1 und die sich auf diesem befindliche Aluminiumoxidschicht 19 zu sehen. Die Klebeschicht 16 ist direkt auf der Aluminiumoxidschicht 19 angeordnet und verbindet somit ein Metalloxid mit einem Polymer.

Das anorganisch-organischen Hybridpolymer geht eine kovalente Bindung zu der Aluminiumoxidschicht 19 ein und gewährleistet dadurch eine gute Haftung. Insbesondere findet, bedingt durch die Porosität der Aluminiumoxidschicht 19, eine mechanische Verankerung der Klebeschicht 16 in dieser statt. Die Aluminiumoxidschicht 19 kann durch geeignete Vorbehandlung des Aluminium-Verformungskörpers, namentlich Erwärmen auf Temperaturen unterhalb 100°C in einer Sauerstoffatmosphäre oder durch chemische oder elektrochemische Behandlung gezielt in ihrer Schichtdicke vergrössert und hinsichtlich ihrer Porosität modifiziert werden, um die Haftung zu verstärken.

In der Figur 4 ist ebenfalls in einer Schnittzeichnung die Anordnung aus Figur 3 dargestellt, wobei der Dehnmessstreifen 13 auf seiner Oberseite noch mit einer Schutzschicht 20 gegen eindringende Feuchtigkeit versehen ist. Diese Schutzschicht 20 besteht aus einem anorganischen Material, und kann über ihre Schichtdicke inhomogen ausgebildet sein. In bevorzugter Ausgestaltung besteht sie aus mehreren Lagen von Siliziumnitrid im Wechsel mit Siliziumoxid, wobei die Dicke der einzelnen Lagen zwischen 50 und 200 Nanometer liegt. In der Figur ist ein Beispiel einer dreilagigen Schutzschicht 20 aus einer ersten Lage Siliziumnitrid 22, einer zweiten Lage Siliziumoxid 23 und einer dritten Lage Siliziumnitrid 22 gezeigt. Die Siliziumnitridlagen 22 dienen als Barrierelagen, die Siliziumoxidlagen 23 sollen als Zwischenlagen Mikroporen und Mikrorisse der Barrierelage abdecken.

Der Mehrlagenschicht 20 ist eine ausebnende Schicht 21 aus einem Polymer, beispielsweise eine Acrylat- oder Methacrylat-Polymerschicht oder eine anorganisch-organische Hybridpolymerschicht, in bevorzugter Weise eine, die der Klebeschicht 16 entspricht, unterlegt. Eine solche Schicht 21 glättet die Oberfläche des Dehnmessstreifens 13, insbesondere im Bereich der Kanten, beispielsweise an denjenigen der Widerstandsbahn 14, wodurch deren Flankensteilheit reduziert wird. Ausserdem werden Unregelmässigkeiten der Oberfläche oder gar Fehlstellen oder Schmutzpartikel, sei dies nun auf der Widerstandsbahn 14 oder dem Träger 15 in ausgleichender Weise abgedeckt. Ausserdem wird durch die ausebnende Polymerschicht 21 die Wahrscheinlichkeit des Entstehens oder Anheftens von Mikroporen oder Haarrissen in einer darauf aufgebrachten anorganischen Schutzschicht 20 reduziert. Infolgedessen wird die Ausbildung einer fehlstellenarmen auf die ausebnende Schicht 21 aufzubringende bzw. aufgebrachten mehrlagigen anorganischen Schutzschicht 20 begünstigt.

Die Schutzbeschichtung kann nun bereits auf dem zu applizierenden Dehnmessstreifen 13 vorhanden sein oder auf den mit dem Verformungskörper 1 mittels der Klebeschicht 16 verbundenen Dehnmessstreifen 13 aufgebracht werden. In letzterem Falle erstrecken sich ein Teil der Schutzschicht 20 und der dieser unterlegten ausebnenden Polymerschicht 21 über den Dehnmessstreifen 13 hinaus und bedecken mindestens einen Teil des Verformungskörpers 1, insbesondere die an den Dehnmessstreifen 13 angrenzenden Bereiche des Verformungskörpers 1. Dadurch wird das Eindringen von Feuchtigkeit in den Träger 15 weiter verringert.

Die Klebemasse liegt als Lösung der vorkondensierten anorganischen Komponenten und der organischen Komponenten, vorzugsweise reaktive organische Gruppen, in einem herkömmlichen Lacklösungsmittel vor. Durch den Lösungsmittelanteil kann die Viskosität der Klebemasse nach Bedarf der gewählten Methode zum Auftragen, zum Beispiel Streichen, Schleudern, Sprühen, Walzen oder Tampondruck, angepasst werden.

Das bevorzugte Verfahren zum Aufbringen eines Dehnmessstreifens 13 auf den Verformungskörper 1 einer Kraftmesszelle sieht vor, ein anorganisch-organisches Hybridpolymer in gelöster Form mittels Tampondruckverfahren auf den Verformungskörper aufzubringen und anschliessend den Dehnmessstreifen 13 auf die mit der Lösung versehene Fläche absetzen und leicht anzudrücken. Durch Erwärmen bei Temperaturen zwischen 80°C und 130°C, wobei der Dehnmessstreifen mit einem Druck, der zwischen 100kN/m² und 1000kN/ m² liegt, beaufschlagt wird, wird die Klebeschicht 16 durch Vernetzung aushärten. Die Aushärtetemperatur hängt von der Wahl der Komponenten des anorganisch-organischen Hybridpolymers ab und ist hinsichtlich eines möglichst geringen Anstiegs der Viskoelastizität des Verformungskörpers mit der Dauer der Einwirkung der erhöhten Temperatur, welche zwischen einer und drei Stunden betragen kann, abgestimmt. Es sei an dieser Stelle erwähnt, dass die Viskoelastizität von Aluminium bei einer Erniedrigung der Aushärtetemperatur von 150°C auf 100°C bereits um 50% reduziert werden kann.

Das Tampondruckverfahren sieht vor, mittels eines elastisch verformbaren Kissens, dem Tampon, das anorganisch-organische Hybridpolymer in gelöster Form - die Klebemasse - aus einer mit einer geätzten Vertiefung versehenen Platte, dem Klischee, aufzunehmen und auf dem Verformungskörper direkt an die Stelle des zu befestigenden Dehnmessstreifens zu deponieren. Durch eine angepasste Viskosität der Lösung einerseits und durch die Verformbarkeit des Tampons andererseits wird beim Auftragen die Form der Klebemasse beibehalten und es wird eine gleichmässige Klebeschicht 16 erzeugt.

Die mit einem Dehnmessstreifen, der mittels einer erfindungsgemäsen Klebeschicht aufgebracht wurde, versehene Kraftmesszelle wurde in einer bevorzugten Ausgestaltung beschrieben und dargestellt. Anhand der erfindungsgemässen Lehre sind jedoch weitere fachmännische Ausgestaltungen realisierbar. Zum Beispiel ist das Material für den Träger des Dehnmessstreifens nicht auf Polyimid beschränkt. Es können auch andere Polymere wie Epoxide, Phenolharze, Melamine und Ketone für Dehnmessstreifen, die in der Wägetechnologie Einsatz finden, verwendet werden. Abhängig vom Trägermaterial ist dann das Material für die Klebeschicht zu verwenden. Dies betrifft insbesondere die Variation der polymeren Komponente des anorganisch-organischen Hybridpolymers.

### Bezugszeichenliste

- 1: Verformungskörper
- 2: Biegestelle
- 3: Biegestelle
- 4: Biegestelle
- 5: Biegestelle
- 6: bogenförmig erweiterter Randbereich
- 7: bogenförmig erweiterter Randbereich
- 8: Ausnehmung
- 9: Lastaufnehmer
- 10: Gewinde
- 11: Feststehender Teil
- 12: Oberseite des Verformungskörpers
- 13: Dehnmessstreifen
- 14: Widerstandsbahn
- 15: Träger
- 16: Klebeschicht
- 17: Anschlusselektroden
- 18: Aluminiumbereich des Verformungskörpers
- 19: Aluminiumoxid-Schicht auf dem Verformungskörper
- 20: Schutzschicht
- 21: Ausebnende Schicht
- 22: Barriereschicht
- 23: Zwischenschicht

## Patentansprüche

1. Kraftmesszelle mit einem Verformungskörper (1) und mit mindestens einem auf dem Verformungskörper (1) vermittels einer Klebeschicht (16) aufgebrachten Dehnmessstreifen (13), der eine dehnungsempfindliche, auf einem polymeren Träger (15) aufgebrachte elektrische Widerstandsbahn (14) aufweist, **dadurch gekennzeichnet, dass** die Klebeschicht (16) aus einem anorganisch-organischen Hybridpolymer besteht und dass der mindestens eine Dehnmessstreifen (13) mit einer Schutzschicht (20) gegen eindringende Feuchtigkeit, welcher eine ausebnende Schicht (21), die aus einem Polymer oder aus einem anorganisch-organischen Hybridpolymer besteht, unterlegt ist, versehen ist, wobei die Schutzschicht (20) als Mehrlagenschicht aus Barrierelagen und Zwischenlagen ausgebildet ist, wobei die Barrierelagen anorganische Materialien und die Zwischenlagen Polymere oder anorganische Materialien sind.

2. Kraftmesszelle nach Anspruch 1, **dadurch gekennzeichnet, dass** die als Schutzschicht (20) ausgebildete Mehrlagenschicht sich aus einer abwechselnden Folge von einer Barriereschicht (22) aus Siliziumnitrid und einer Zwischenschicht (23) aus Siliziumoxid, zusammensetzt.

3. Kraftmesszelle nach Anspruch 1 oder 2, **dadurch gekennzeichnet, dass** der Verformungskörper (1) aus Aluminium gefertigt ist, wobei der Verformungskörper (1) an seiner Oberfläche eine Aluminiumoxidschicht (19) aufweist, welche aufgrund einer chemischen, elektrochemischen oder thermischen Behandlung gegenüber einer natürlichen Oxidschicht in ihrer Dicke verstärkt ist und/oder eine erhöhte Porosität aufweist, wodurch die Bindung zur Klebeschicht (16) durch eine mechanische Verankerung der Klebeschicht (16) in der Aluminiumoxidschicht (19) verstärkt ist.

4. Verfahren zum Befestigen eines Dehnmessstreifens (13) auf einem Verformungskörper (1) einer Kraftmesszelle, **dadurch gekennzeichnet, dass** eine Klebemasse, die aus einem anorganisch-organisches Hybridpolymer in gelöster Form besteht, zur Erzeugung einer Klebeschicht (16) auf den Verformungskörper (1) aufgetragen wird, der Dehnmessstreifen (13) auf die Klebemasse aufgebracht wird und anschliessend die Klebeschicht (16) bei einer Temperatur zwischen 80°C und 130°C ausgehärtet wird, wobei der Verformungskörper (1) mit dem Dehnmessstreifen (13) während einer Dauer zwischen einer halben Stunde und drei Stunden der erhöhten Temperatur ausgesetzt wird und dass der mindestens eine Dehnmessstreifen (13) mit einer Schutzbeschichtung gegen eindringende Feuchtigkeit versehen wird, welche eine ausebnende Schicht (21), die aus einem Polymer oder aus einem anorganisch-organischen Hybridpolymer besteht, aufweist, die direkt auf den Dehnmessstreifen appliziert wird und eine Schutzschicht (20) aufweist, die als Mehrlagenschicht aus Barrierelagen und Zwischenlagen ausgebildet ist, wobei die Barrierelagen anorganische Materialien und die Zwischenlagen Polymere oder anorganische Materialien sind.

5. Verfahren nach Anspruch 4, **dadurch gekennzeichnet, dass** der Dehnmessstreifen (13) während des Aushärtens mit einem Druck zwischen 100 kN/m² und 1000 kN/m² beaufschlagt wird.

6. Verfahren nach Anspruch 4 oder 5 für einen Verformungskörper (1) aus Aluminium, **dadurch gekennzeichnet, dass** zur Vergrösserung der Aluminiumoxidschicht (19) seiner Oberfläche dieser vor dem Auftragen der Klebemasse zur Erzeugung der Klebeschicht (16) in Sauerstoffatmosphäre bei einer Temperatur zwischen 40°C und 100°C erwärmt wird.

7. Verfahren nach Anspruch 4 oder 5 für einen Verformungskörper (1) aus Aluminium, **dadurch gekennzeichnet, dass** zur Vergrösserung der Aluminiumoxidschicht (19) seiner Oberfläche dieser vor dem Auftragen der Klebemasse zur Erzeugung der Klebeschicht (16) einer chemischen oder elektrochemischen Behandlung unterzogen wird.

8. Verfahren nach einem der Ansprüche 4 bis 7, **dadurch gekennzeichnet, dass** das Auftragen der Klebmasse zur Erzeugung der Klebeschicht (16) mittels Tampondruckverfahren erfolgt.

9. Verfahren nach einem der Ansprüche 4 bis 8, **dadurch gekennzeichnet, dass** die Schutzbeschichtung auf einen bereits auf einem Verformungskörper (1) aufgeklebten Dehnmessstreifen (13) aufgebracht wird.

## Claims

1. Force-measuring cell with a deformable body (1) and with at least one strain gauge (13) which is installed on the deformable body (1) by means of an adhesive layer (16) and which has a strain-sensitive electrical resistor track (14) arranged on a polymer carrier substrate (15), **characterized in that** the adhesive layer (16) consists of an inorganic-organic hybrid polymer, and further that the at least one strain gauge (13) is provided with a protective coating (20) against moisture penetration, wherein the protective coating (20) is underlaid with a surface-smoothing layer (21) consisting of a polymer or of an inorganic-organic hybrid polymer, and wherein the protective coating (20) is a multilayered coating which is composed of barrier layers and intermediate layers, wherein the barrier layers are inorganic materials and the intermediate layers are polymers or inorganic materials.

2. Force-measuring cell according to claim 1, **characterized in that** the multilayered coating which is configured as protective coating (20) is composed of an alternating sequence of a barrier layer (22) of silicon nitride and an intermediate layer (23) of silicon oxide.

3. Force-measuring cell according to claim 1 or 2, **characterized in that** the deformable body (1) is made of aluminum, wherein the deformable body (1) has on its surface an aluminum oxide layer (19) which in comparison to a natural oxide layer has an increased thickness and/or an increased porosity due to a chemical, electrochemical or thermal treatment, whereby the bond to the adhesive layer (16) is strengthened by a mechanical anchoring of the adhesive layer (16) in the aluminum oxide layer (19).

4. Method of fastening a strain gauge (13) on a deformable body (1) of a force-measuring cell, **characterized in that** an adhesive compound consisting of an inorganic-organic hybrid polymer in solution is applied to the deformable body (1) in order to produce an adhesive layer (16), that the strain gauge (13) is placed on the adhesive compound, and that the adhesive layer (16) is subsequently hardened at a temperature between 80°C and 130°C by exposing the deformable body (1) with the strain gauge (13) to the increased temperature for a duration between half an hour and three hours, and further **characterized in that** the at least one strain gauge (13) is given a layered protective covering against moisture penetration, wherein said layered covering comprises a surface-smoothing layer (21) which consists of a polymer or of an inorganic-organic hybrid polymer and is applied directly to the strain gauge, and said layered covering further comprises a protective coating (20) configured as a multilayered coating which is composed of barrier layers and intermediate layers, wherein the barrier layers are inorganic materials and the intermediate layers are polymers or inorganic materials.

5. Method according to claim 4, **characterized in that** the strain gauge (13) is subjected to a contact pressure between 100 kN/m² and 1000 kN/m² during the hardening.

6. Method according to claim 4 or 5 for a deformable body (1) of aluminum, **characterized in that** prior to applying the adhesive compound for producing the adhesive layer (16), the deformable body (1) is heated under oxygen atmosphere at a temperature between 40°C and 100°C in order to increase the aluminum oxide layer (19) on the surface of the deformable body (1).

7. Method according to claim 4 or 5 for a deformable body (1) of aluminum, **characterized in that** prior to applying the adhesive compound for producing the adhesive layer (16), the deformable body (1) is subjected to a chemical or electrochemical treatment in order to increase the aluminum oxide layer (19) on the surface of the deformable body (1).

8. Method according to one of the claims 4 to 7, **characterized in that** the application of the adhesive compound for producing the adhesive layer (16) is performed by means of a tampon-printing method.

9. Method according to one of the claims 4 to 8, **characterized in that** the layered protective covering is applied to a strain gauge (13) which has already been installed on a deformable body (1).

## Revendications

1. Cellule de mesure de force comprenant un corps de déformation (1) et au moins une jauge de contrainte (13) appliquée sur le corps de déformation (1) au moyen d'une couche adhésive (16), laquelle présente une bande de résistance (14) électrique, sensible à la dilatation et appliquée sur un support (15) polymère, **caractérisée en ce que** la couche adhésive (16) est à base d'un polymère hybride inorganique et organique et **en ce que** la au moins une jauge de contrainte (13) est dotée d'une couche de protection (20) contre la pénétration d'humidité, en dessous de laquelle est posée une couche (21) égalisatrice, qui est à base d'un polymère ou d'un polymère hybride inorganique et organique, la couche de protection (20) étant réalisée sous forme de couche multicouches à base de couches de barrière et de couches intermédiaires, les couches de barrière étant des matériaux inorganiques et les couches intermédiaires des polymères ou des matériaux inorganiques.

2. Cellule de mesure de force selon la revendication 1, **caractérisée en ce que** la couche multicouches conçue comme couche de protection (20) se compose d'une succession alternative d'une couche de barrière (22) à base de nitrure de silicium et d'une couche intermédiaire (23) à base d'oxyde de silicium.

3. Cellule de mesure de force selon la revendication 1 ou 2, **caractérisée en ce que** le corps de déformation (1) est fabriqué en aluminium, le corps de déformation (1) comprenant sur sa surface une couche d'oxyde d'aluminium (19), laquelle est renforcée dans son épaisseur par rapport à une couche d'oxyde naturelle en raison d'un traitement chimique, électrochimique ou thermique et/ou présente une porosité élevée, la liaison avec la couche adhésive (16) étant renforcée par un ancrage mécanique de la couche adhésive (16) dans la couche d'oxyde d'aluminium (19).

4. Procédé pour la fixation d'une jauge de contrainte (13) sur un corps de déformation (1) d'une cellule de mesure de force, **caractérisé en ce qu'**une masse adhésive, qui se compose d'un polymère hybride inorganique et organique dans une forme dissoute, est appliquée sur le corps de déformation (1) pour générer une couche adhésive (16), la jauge de contrainte (13) est appliquée sur la masse adhésive et ensuite la couche adhésive (16) est durcie à une température comprise entre 80°C et 130°C, le corps de déformation (1) avec la jauge de contrainte (13) étant exposé pendant une durée comprise entre une demi-heure et trois heures à la température élevée et **en ce que** la au moins une jauge de contrainte (13) est dotée d'un revêtement de protection contre la pénétration d'humidité, lequel présente une couche (21) égalisatrice, qui est à base d'un polymère ou d'un polymère hybride inorganique et organique, est appliquée directement sur la jauge de contrainte et présente une couche de protection (20) qui est conçue sous forme de couche multicouches constituée de couches de barrière et de couches intermédiaires, les couches de barrière étant des matériaux inorganiques et les couches intermédiaires des polymères ou des matériaux inorganiques.

5. Procédé selon la revendication 4, **caractérisé en ce que** la jauge de contrainte (13) est sollicité pendant le durcissement avec une pression comprise entre 100 kN/m² et 1000 kN/m².

6. Procédé selon la revendication 4 ou 5 pour un corps de déformation (1) en aluminium, **caractérisé en ce que**, pour l'agrandissement de la couche d'oxyde d'aluminium (19) de sa surface, ce corps est réchauffé à une température comprise 40°C et 100°C avant l'application de la masse adhésive pour générer la couche adhésive (16) dans une atmosphère d'oxygène.

7. Procédé selon la revendication 4 ou 5 pour un corps de déformation (1) en aluminium, **caractérisé en ce**, pour agrandir la couche d'oxyde d'aluminium (19) de sa surface, ce corps est soumis à un traitement chimique ou électrochimique avant l'application de la masse adhésive pour générer la couche adhésive (16).

8. Procédé selon l'une quelconque des revendications 4 à 7, **caractérisé en ce que** l'application de la masse adhésive s'effectue au moyen d'un procédé d'impression par tampon pour générer la couche adhésive (16).

9. Procédé selon l'une quelconque des revendications 4 à 8, **caractérisé en ce que** le revêtement de protection est appliqué sur une jauge de contrainte (13) déjà collée sur un corps de déformation (1).
